## Europäisches Patentamt

## European Patent Office

## Office européen des brevets

(19)

(11) Veröffentlichungsnummer: **0 056 437**
A2

(12) **EUROPÄISCHE PATENTANMELDUNG**

(21) Anmeldenummer: 81108710.5

(22) Anmeldetag: 22.10.81

(51) Int. Cl.³: **H 02 P 5/00**
G 05 B 13/00

(30) Priorität: 19.01.81 DE 3101511

(43) Veröffentlichungstag der Anmeldung:
28.07.82 Patentblatt 82/30

(84) Benannte Vertragsstaaten:
DE FR GB IT

(71) Anmelder: SIEMENS AKTIENGESELLSCHAFT Berlin
und München
Postfach 22 02 61
D-8000 München 22(DE)

(72) Erfinder: Stärk, Jakob, Dipl.-Ing.
Georg-Queri-Strasse 10
D-8047 Karlsfeld(DE)

(72) Erfinder: Wetzel, Klaus, Ing.grad.
Schwingensteinweg 14
D-8000 München 83(DE)

(54) Verfahren und Anordnung zur Belastungsermittlung von durch einen Elektromotor angetriebenen Geräten.

(57) Die Erfindung betrifft ein Verfahren und eine Anordnung zur Belastungsermittlung von durch einen Elektromotor (16) angetriebenen Geräten insbesondere Haushaltsgeräten, die bei unterschiedlichen Belastungszuständen unterschiedliche Arbeitsprogramme abwickeln und bei denen die Betriebsspannung des Elektromotors mittels einer Regelelektronik (22) geregelt wird, und bei dem der das jeweilige Arbeitsprogramm bestimmende Belastungszustand durch Vergleich mindestens einer, von der die Betriebsspannung des Elektromotors (16) regelnden Regelelektronik (22) gelieferten Größe und mindestens eines für den Elektromotor (16) vorgegebenen Vergleichswertes ermittelt wird.

FIG 6

0056437

SIEMENS AKTIENGESELLSCHAFT     Unser Zeichen
Berlin und München             VPA 81 P 1 0 0 6 E

## Verfahren und Anordnung zur Belastungsermittlung von durch einen Elektromotor angetriebenen Geräten

Die Erfindung betrifft ein Verfahren und eine Anordnung zur Belastungsermittlung von durch einen Elektromotor angetriebenen Geräten, insbesondere Haushaltsgeräten, die bei unterschiedlichen Belastungszuständen unterschiedliche Arbeitsprogramme abwickeln und bei denen die Betriebsspannung des Elektromotors mittels einer Regelelektronik geregelt wird.

Bei zahlreichen mittels eines Elektromotors angetriebenen Geräten, insbesondere Haus- und Küchengeräten, werden abhängig vom Belastungs- bzw. Beladungszustand unterschiedliche Arbeitsprogramme verwendet. So weisen z. B. herkömmliche Waschautomaten nicht nur ein einziges, sondern mehrere Waschprogramme auf. Wird die Waschtrommel nicht mit dem zulässigen maximalen Wäschegewicht sondern z. B. nur mit der Hälfte des zulässigen maximalen Wäschegewichtes gefüllt, so ist in der Regel ein Sparprogramm vorgesehen, bei dem beispielsweise nur der halbe Wasserstand, kürzere Waschzeiten und/oder niedrigere Waschmittelmengen benötigt werden, der Waschvorgang somit wirtschaftlicher als bei einem Vollwaschgang ist.

Eine Belastungerkennung oder - überwachung ist bei herkömmlichen Waschautomaten oder anderen Haushaltsgeräten nur mit großem technischen Aufwand erreichbar und daher wirtschaftlich nicht vertretbar. Aus diesem Grunde wird bisher der Beladungs- bzw. Belastungszustand durch eine Bedienungsperson abgeschätzt und das Arbeitsprogramm, z. B. ein Sparprogramm bei Waschmaschinen, entsprechend der Schätzung ausgewählt.

Nte 1 Kth / 15.01.81

Dieses Verfahren ist jedoch bei ungeübten Bedienungspersonen oder bei der Verwendung von mehreren Arbeitsprogrammen je nach Größe der Belastung oft fehlerhaft.

Aufgabe der Erfindung ist es, hier Abhilfe zu schaffen und ein Verfahren vorzusehen, bei dem der Belastungszustand von durch einen Elektromotor angetriebenen Geräten zuverlässig und in wirtschaftlich günstiger Weise ermittelt wird.

Zur Lösung dieser Aufgabe geht die vorliegende Erfindung davon aus, daß elektromotorisch getriebene Geräte vielfach über eine die Betriebsspannung des Elektromotors regelnde Regelelektronik verfügen. In Wechsel- oder Drehstromnetzen wird die Betriebsspannung in der Regel mittels einer Phasenanschnittssteuerung geändert. So ist z. B. aus der Literaturstelle SIEMENS Schaltbeispiele, Ausgabe 1980/81, Nr. B/2293, Seiten 187 - 189 eine elektronische Motorsteuerung bekannt, bei der zur Steuerung des Phasenwinkels ein integrierter Schaltkreis eingesetzt wird, der Zündimpulse für ein in den Leistungskreis des Elektromotors geschaltetes Triac erzeugt. An Stelle einer Phasenanschnittssteuerung ist es aber auch möglich, die Betriebsspannung impulsförmig an den Motor zu legen und die Drehzahl durch Änderung der Impulsbreite, d. h. des Tastverhältnisses zu regeln. Ein entsprechender Drehzahlregeler ist z. B. in der Literaturstelle SIEMENS Datenbuch 1980/81, lineare Schaltungen, Seiten 167 - 172 beschrieben. In der deutschen Patentanmeldung P 30 44 154 wird ferner ein Verfahren zur Steuerung und/oder Regelung der Betriebsspannung von Elektromotoren, bei dem der Leistungskreis des Elektromotors mittels eines Steuersignals gesteuert wird, verwendet, bei dem das Steuersignal durch Überlagerung zweier Signale, wie z. B. Phasenwinkelsignal und Impulsbreitensignal, unterschiedlicher Frequenz erzeugt wird und bei dem zum Erzielen eines Regeleffektes das Tastverhältnis mindestens eines der beiden Signale

variiert wird.

Diese Aufgabe wird nun erfindungsgemäß bei einem Verfahren der eingangs genannten Art dadurch gelöst, daß der Belastungszustand durch Vergleich mindestens einer von der die Betriebsspannung des Elektromotors regelnden Regelelektronik gelieferten Größe und mindestens eines für den Elektromotor vorgegebenen Vergleichswertes ermittelt wird. Dadurch wird es ermöglicht, unter Verwendung der vorhandenen Regelelektronik bzw. mit einer geringfügigen Erweiterung der Regelelektronik den Belastungszustand elektronisch zu bestimmen.

Es liegt im Rahmen der Erfindung, als Vergleichswerte einen oder mehrere, einem Teil der Maximalbelastung des Elektromotors entsprechende Werte vorzugeben und somit einem bestimmten Belastungsbereich ein bestimmtes Arbeitsprogramm zuzuordnen. Werden nur zwei Arbeitsprogramme in Abhängigkeit vom Belastungszustand benötigt, so ist es vorteilhaft, als Vergleichswert einen in etwa 3/4 der Maximalbelastung des Elektromotors entsprechenden Wert vorzugeben.

Wird als Regelelektronik eine Drehzahlregelung verwendet, bei der die Regelgröße Drehzahl mit Hilfe einer Stellgröße so beeinflußt wird, daß die Abweichung von Soll-Drehzahl und Ist-Drehzahl möglichst gering wird, so können erfindungsgemäß als von der Regelelektronik gelieferte Größe die sich nach der Anlaufphase des Elektromotors bei fest vorgegebenem Stellwert sich ergebende Motordrehzahl oder der sich nach der Anlaufsphase des Elektromotors bei einer vorgegebenen Soll-Drehzahl ergebene Stellwert, oder die vorzugsweise bei konstantem vorgegebenen Stellwert zum Erreichen einer vorgegebenen Soll-Drehzahl benötigte Zeitdauer oder die zum Erreichen eines vorgegebenen Stellwertes benötigte Zeitdauer verwendet werden.

Bei Verwendung eines Asynchronmotors als Elektromotor, der zwar nur eine geringe Abhängigkeit der Drehzahl von der Belastung, aber eine erhebliche Abhängigkeit der Wirkleistung bzw. des Wirkungsgrades von der Belastung bei konstanter Betriebsspannung aufweist, und dessen Betriebsspannung daher vorteilhafterweise ebenfalls geregelt werden sollte, kann erfindungsgemäß als von der Regelelektronik gelieferte Größe die Phasendifferenz zwischen Betriebsspannungsnulldurchgang und Betriebsstromnulldurchgang verwendet werden.

Als Stellwert kann je nach Ausführung der Regelelektronik der für den Leitungsteil des Elektromotors gelieferte Phasenanschnittswinkel oder die Breite des Impulsbreitensignals verwendet werden.

Bei einer Anordnung zur Durchführung des erfindungsgemäßen Verfahrens ist in Weiterbildung der Erfindung vorgesehen, daß zur Belastungsermittlung ein gleichzeitig zur Betriebsspannungsregelung und zur Steuerung des Arbeitsprogramms dienender Mikrocomputer vorgesehen ist, der in einem Speicher einen Speicherbereich zur Speicherung der vorgegebenen Vergleichswerte aufweist. Ausgestaltungen der erfindungsgemäßen Anordnung sind in Unteransprüchen gekennzeichnet.

Die Erfindung wird im folgenden an Hand der Figuren näher erläutert.
Dabei zeigen:

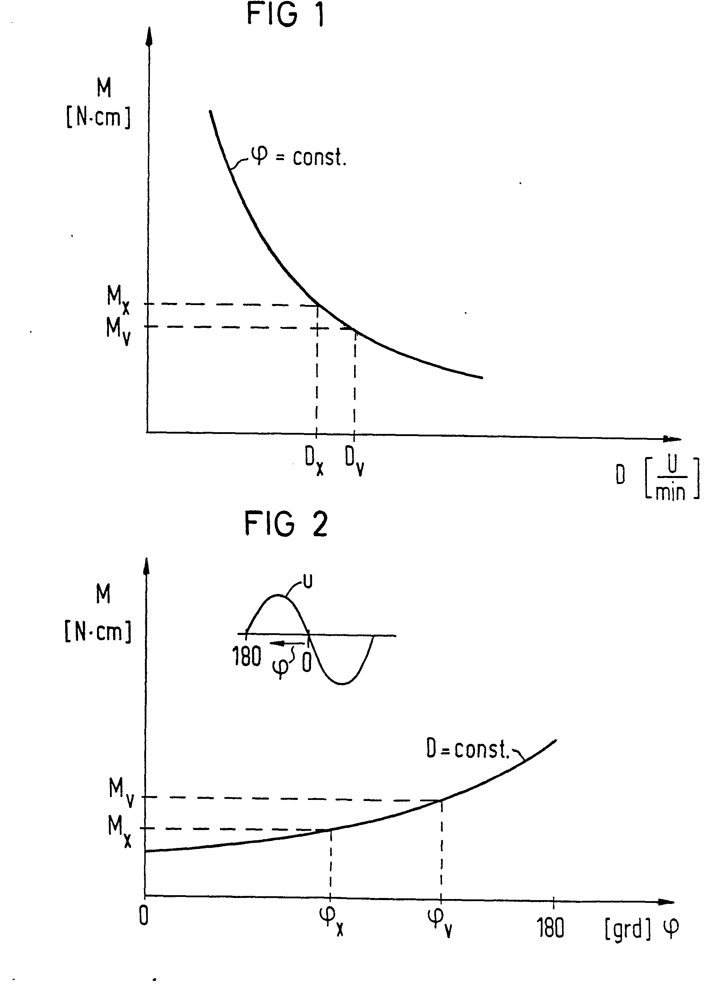

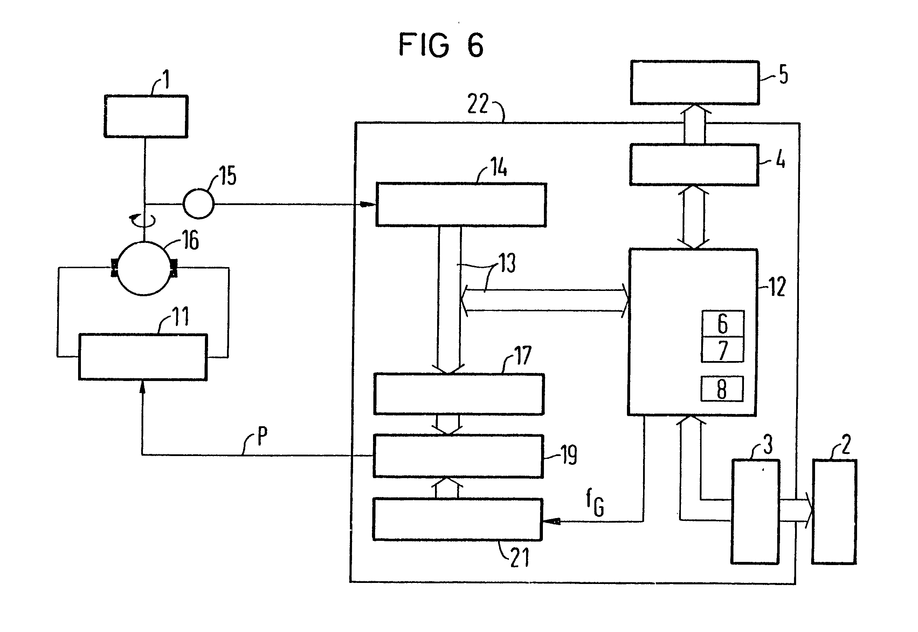

Die Figuren 1 bis 5 graphische Darstellungen des Belastungsmoments eines Elektromotors in Abhängigkeit von unterschiedlichen von der Regelelektronik gelieferten Größen und die Figur 6 ein Ausführungsbeispiel für eine Anordnung zur Durchführung des erfindungsgemäßen Verfahrens.

In der Fig. 1 ist die Abhängigkeit der Drehzahl D eines Elektromotors vom Belastungsmoment M des Motors bei konstantem als Stellwert genommenem Phasenanschnittswinkel $\varphi$ dargestellt. Ist eine entsprechende Kurve für einen bestimmten Elektromotor bzw. einen bestimmten Elektromotorentyp einmal bekannt, so läßt sich bei konstantem Phasenanschnittswinkel jedes Belastungsmoment M des Elektromotors durch Erfassen der Drehzahl D nach Abwarten der Anlaufphase des Elektromotors ermitteln.

Geht man beispielsweise von einem eine Waschtrommel einer Waschmaschine antreibenden Elektromotor aus, dessen Belastungsmoment M zum eventuellen Einstellen eines Sparprogrammes ermittelt werden soll, so genügt im einfachsten Fall die Ermittlung eines Entscheidungskriteriums für die Frage, ob ein Normalprogramm oder ein Sparprogramm durchgeführt werden soll. In diesem Fall genügt es für eine Waschmaschine einen einzigen Drehzahlwert $D_V$ vorzugeben, der einem Belastungsmoment $M_V$, beispielsweise einem bestimmten Wäschegewicht, entspricht, bei dessen Überschreiten ein Normalwaschgang und bei dessen Unterschreiten einen Sparwaschgang durchgeführt werden soll. In diesem Falle muß der bei der Belastungsermittlung ermittelte Drehzahlwert $D_X$ lediglich mit dem Vergleichswert $D_V$ verglichen werden, ist $D_X$ kleiner $D_V$ wird ein Normalwaschgang durchgeführt, ist $D_X$ größer als $D_V$ wird ein Sparwaschgang durchgeführt.

Sollen in Abhängigkeit vom Belastungsmoment M mehrere unterschiedliche Arbeitsprogramme durchgeführt werden, so können mehrere z. B. bestimmten Bruchteilen der Maximalbelastung des Elektromotors entsprechende Vergleichswerte $D_V$ vorgegeben werden. Je nach dem in welchem Bereich der vorgegebenen Vergleichswerte die bei der Belastungsermittlung ermittelte Drehzahl $D_X$ fällt, kann dann ein anderes Arbeitsprogramm durchgeführt werden, oder das zur ermittelten Drehzahl $D_X$ gehörige Belastungsmoment $M_X$ durch Berechnung der als Funktion abgespeicherte Kurve festgestellt werden.

In welchem vom gewählten konstanten Phasenanschnittswinkel abhängigen Drehzahlbereich die Belastungsermittlung durchgeführt wird ist prinzipiell unerheblich, kann aber je nach Anwendungsfall variieren. Bei einer Waschmaschine kann dies im einfachsten Fall die Drehzahl sein, die für den ersten Programmschritt benötigt wird. Günstig ist es, die Drehzahl oberhalb der üblichen Waschdrehzahl in einem Bereich, in dem die Wäsche an den Wäschetrommelwänden anliegt, zu wählen, um Verfälschungen durch Unwucht, Reibung etc. zu verhindern. Im einfachsten Fall wird bei einer Waschmaschine die Belastung bei eingefüllter trockener Wäsche ermittelt. Messfehler, die durch unterschiedlichen Feuchtegrad der eingefüllten Wäsche auftreten, können vermieden werden, wenn vor dem Belastungsermittlungsschritt die Wäsche in der Waschmaschine eingewässert und das Wasser dan abgepumpt oder abgeschleudert wird. In den Figuren 2 bis 5 sind weitere Möglichkeiten der Belastungsermittlung durch graphische Darstellung verdeutlicht. Für die Ermittlung des Belastungsmomentes im Vergleich zu einem oder mehreren Vergleichswerten und für die Wahl des zur Ermittlung benutzten Drehzahlbereiches gilt das zur Beschreibung der Fig. 1 Gesagte entsprechend.

In der Fig. 2 ist die Abhängigkeit des als Stellwert benutzten Phasenanschnittswinkels $\varphi$ vom Belastungsmoment M bei fest vorgegebener Soll-Drehzahl dargestellt. Wiederum muß zur Ermittlung des zu einem bestimmten Belastungsmomentes $M_X$ gehörigen Phasenanschnittswinkels $\varphi_X$ die Motoranlaufphase abgewartet werden, so daß sich zum Zeitpunkt der Phasenwinkelermittlung die Motorendrehzahl nicht mehr ändert.

Das gesuchte Belastungsmoment $M_X$ und damit das zu verwendende Arbeitsprogramm kann wiederum durch Vergleich des gemessenen Phasenanschnittswinkels $\varphi_X$ mit einem bekannten Belastungsmoment $M_V$ entsprechendem vorgegebenen Vergleichsphasenanschnittswinkel $\varphi_V$ ermittelt werden.

0056437

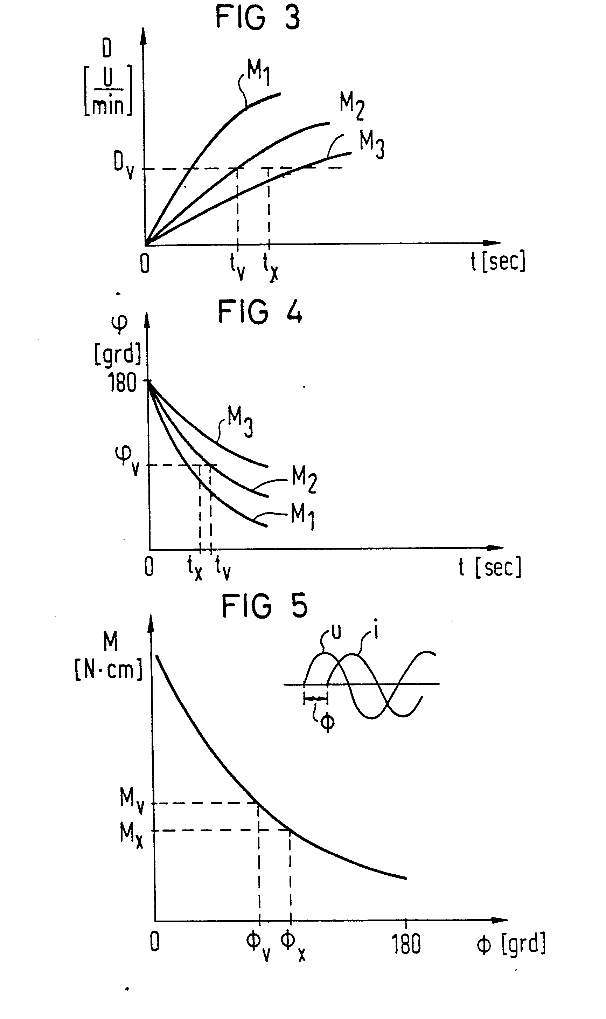

In der Fig. 3 ist der zeitliche Verlauf der Drehzahl D eines Elektromotors in Abhängigkeit von unterschiedlichen Belastungsmomenten $M_1$, $M_2$ und $M_3$ dargestellt, wobei $M_1 < M_2 < M_3$ ist. Gibt man als Vergleichswert eine bestimmte Drehzahl $D_V$ vor und mißt die Zeit $t_x$, die der Motor in seiner Anlaufphase ausgehend von einem Zeitpunkt t = 0 oder einem anderen festgelegten Zeitpunkt zum Erreichen der Vergleichsdrehzahl $D_V$ benötigt, so kann durch Vergleich der gemessenen Zeit $t_x$ und der zu einem vorgegebenen Vergleichsbelastungsmoment (in der Fig. $M_2$) bekannterweise gehörenden Anlaufzeit $t_V$ die gewünschte Belastung ermittelt werden.

Der als Stellwert dienende Phasenanschnittswinkel $\varphi$ kann bei dieser Art der Belastungsermittlung konstant gehalten werden, es ist aber auch möglich die einzelnen Werte nach Fig. 3 bei eingeschalteter zur Betriebsspannungsregelung des Elektromotors dienender Regelelektronik und somit bei im allgemeinen nicht konstantem Phasenanschnittswinkel festzustellen.

In der Fig. 4 ist die zeitliche Abhängigkeit des Phasenanschnittswinkels $\varphi$ bei unterschiedlichen Belastungsmomenten $M_1$, $M_2$ und $M_3$ mit $M_1 < M_2 < M_3$ dargestellt. Analog zur Fig. 3 kann durch Vergleich der gemessenen Zeit $t_x$ und der bekannten, zum Vergleichsbelastungsmoment $M_2$ gehörenden Zeit $t_V$, die benötigt wird um einen vorgegebenen Vergleichsphasenanschnittswinkel $\varphi_V$ zu erreichen, das aktuelle Belastungsmoment ermittelt werden. Hierbei kann eine bestimmte zu erreichende Soll-Drehzahl für die Regelungselektronik bereits vorgegeben sein.

Die mittels der Figuren 1 bis 4 gezeigten Belastungsermittlungsverfahren können vorteilhaft bei Kollektormotoren, beispielsweise bei wirtschaftlich günstigen Universalhaupt- oder Nebenschlußmotoren angewendet werden. Da bei Asynchronmotoren wegen der geringen Abhängigkeit der Drehzahl von der Belastung eine Belastungserkennung über die Erfassung von Drehzahländerungen nur schwer möglich ist, empfiehlt es sich, zur Belastungsermittlung von Asynchronmotoren, bei denen zwischen dem Null-Durchgang der Betriebsspannung und zwischen dem Null-Durchgang des Betriebsstromes eine von der Belastung abhängige Phasendifferenz $\phi$ besteht, diese Phasendifferenz zur Belastungsermittlung auszunutzen. Der Null-Durchgang der Betriebsspannung u kann beispielsweise durch einen Null-Durchgangs-Detektor, der Null-Durchgang des Betriebsstroms i beispielsweise durch einen Hall-Generator ermittelt werden. Die Abhängigkeit des Belastungsmomentes M von der zwischen Spannung u und Strom i bestehenden Phasenverschiebung $\phi$ ist in Fig. 5 dargestellt. Entsprechend den zur Beschreibung der Figuren 1 oder 2 gemachten Ausführungen kann aus einer ermittelten Phasenverschiebung $\phi_X$ z. B. durch Vergleich mit einer bekannten, zu einem Vergleichsbelastungsmoment $M_V$ gehörenden Phasenverschiebung $\phi_V$ auf das gesuchte Belastungsmoment $M_X$ geschlossen werden.

Eine Anordnung zur Durchführung des erfindungsgemäßen Verfahrens kann sowohl analog als auch digital arbeitend ausgeführt werden. Vorteilhafterweise wird eine entsprechende Anordnung so ausgeführt, daß die zur Belastungsermittlung benötigten Größen wie Drehzahl D und Phasenanschnittwinkel $\psi$ aus der bereits vorhandenen oder auch ohne Belastungsermittlung benötigten Regelelektronik abgeleitet werden. Ein digital arbeitendes Ausführungsbeispiel zur Durchführung des erfindungsgemäßen Verfahrens zeigt Fig. 6.

Das Ausführungsbeispiel zeigt eine Anordnung, bei der ein Mikrocomputer 12 sowohl zur Steuerung des Arbeitsprogrammablaufs eines Waschautomaten als auch zur Drehzahl- bzw. Betriebsspannungsregelung eines die Waschtrommel 1 des Waschautomaten antreibenden Elektromotors 16 und zur Ermittlung der Belastung bzw. Beladung der Waschtrommel 1 zur Bildung eines Entscheidungskriteriums zur Wahl des Arbeitsprogrammes verwendet wird.

Das Arbeitsprogramm des Waschautomaten betreffende Daten und Kriterien wie Waschtemperatur, Wasserniveau, Programmart oder ähnliches werden beispielsweise über eine Tastatur 2 in ein Eingaberegister 3 eingegeben und bei Bedarf vom Mikrocomputer 12 abgerufen. Die entsprechenden Programmdaten der unterschiedlichen Arbeitsprogramme sind im Programmspeicher des Mikrocomputers 12 gespeichert, der Mikrocomputer 12 ermittelt in bekannter Weise die für Heizung, Ventile, Pumpen, Anzeigen und anderer Agregate notwendigen Ausgabedaten und stellt sie im Ausgaberegister 4, das eine Treiberstufe 5 zum Betrieb dieser Agregate beaufschlagt, bereit. Die Betriebsspannung bzw. die Drehzahl des Motors 16, der die Waschtrommel 1 bewegt und mittels des Motorleistungsteiles 11 mit Betriebsspannung versorgt wird, wird wie folgt mittels der Regelelektronik 22 gesteuert bzw. geregelt:
Ein Tachogenerator 15 ermittelt die Drehzahl des Motors 16 und führt ein der Drehzahl entsprechendes digitales Signal dem Tachozähler 14 zu. Die Drehzahlermittlung kann beispielsweise mittels des in SIEMENS Schaltbeispiele, Ausgabe 1980/81, Seite 184 geschilderten elektronischen Drehzahlwächters, der bei jeder Umdrehung des Motors mittels eines Hall-Schaltkreises einen Impuls an eine Auswerte-Elektronik abgibt, durchgeführt werden. Der Tachozähler 14 ist über eine Datensammelleitung 13 mit dem Mikrocomputer 12 verbunden. In einem Bereich 6 eines Speichers des Mikrocomputers sind die Soll-Werte für die Tastverhältnisse des zur Steuerung des Motorleistungsteiles 11 benötigten Phasenwinkelsignals bei unterschiedlichen Betriebsarbeitspunkten(z. B. Waschen, Schleudern) gespeichert. Der Drehzahl-Ist-Wert wird aus dem Tachozähler 14 ausgelesen und anschließend mit dem Soll-Wert verglichen. Der Mikrocomputer 12 ermittelt mittels ebenfalls vorgegebener Regelkonstanten, bzw. Multiplikatoren, die je nach Anwendungsfall einer P-, I-, oder D-Regelung entsprechen können, die aktuellen Stellwerte für das Phasenwinkelsignal P. Dieser aktuelle Stellwert wird über die Datensammelleitung 13 in einem Stellregister 17 gespeichert.

Eine Frequenzteilerkette 21, die von den Taktimpulsen $f_G$ des Mikrocomputers beaufschlagt wird, teilt die Grundfrequenz $f_G$ auf die Frequenz des Phasenwinkelsignals P. Durch den Vergleicher (Komparator) 19 entsteht aus den Inhalten des Stellregisters 17 und der Frequenzteilerkette 21 Frequenz und Tastverhältnis des Phasenwinkelsignals P, das dem Motorleistungsteil 11 zugeführt wird.

Im Motorleistungsteil 11 können bevorzugt Leistungs-MOS-Transistoren, beispielsweise die aus der Zeitschrift "Electronics", Februar 28, 1980, Seite 63, bekannten SIPMOS-Transistoren zur Anwendung kommen, da mit diesen bei geringer Steuerleistung hohe Spannungen mit hoher Frequenz ein- und ausgeschaltet werden können. Der Einsatz der üblicherweise verwendeten Triacs oder Thyristoren ist nachteilhaft, da diese Bauelemente nur mit verhälnismäßig hohem Schaltungsaufwand abgeschaltet werden können und deshalb für Taktbetrieb weniger geeignet sind.

An Stelle der Ansteuerung des Motorleistungsteils 11 mittels eines Phasenwinkelsignals P kann auch eine Ansteuerung mittels eines Impulsbreitensignals oder eine Ansteuerung mittels eines Signales, das aus einer Überlagerung eines Impulsbreiten und eines Phasenwinkelsignals erzeugt wurde, verwendet werden.

Da die Drehzahlüberwachung und der Arbeitsprogrammablauf bereits über einen zentralen Mikrocomputer 12 abgewickelt wird, können mit dem selben Mikrocomputer 12 entsprechend den oben erwähnten erfindungsgemäßen Belastungsermittlungsverfahren auf einfachste Weise der Beladungs- oder
Belastungsstand der Waschtrommel 1 ermittelt werden.
Sieht man in einem Speicher des Mikrocomputers 12 einen
Speicherbereich 7 zur Speicherung der vorgegebenen Werte
für die Drehzahl $D_V$, den Phasenwinkel $\varphi_V$ oder die Zeiten $t_V$ etc. vor, so kann, da der Mikrocomputer 12 über
die Datensammelleitung 13 sowohl mit dem Tachozähler 14,
dessen Inhalt der Drehzahl des Elektromotors 16 (Ist-Wert)
entspricht, als auch mit dem Stellregister 17, dessen Inhalt dem Phasenanschnittswinkel $\varphi_X$ entspricht, verbunden
ist, mittels einer, in handelsüblichen Mikrocomputern bereits vorhandenen Vergleicherschaltung 8 beispielsweise
gemäß Fig. 1 einfach ermittelt werden, ob der aktuelle Belastungswert $D_X$ kleiner oder größer dem vorgegebenen Belastungswert $D_V$ ist und somit ein normales Programm oder
ein Sparprogramm als Arbeitsprogramm durchgeführt wird.

Bei der erfindungsgemäßen Anordnung kann also aufgrund
der von der Regelelektronik bereitgehaltenen Informationen der Mikrocomputer 12 ohne zusätzlichen Aufwand an
Hardware den Belastungszustand der Waschtrommel 1 ermitteln und eine entsprechende Änderung der Arbeitsprogrammwahl vornehmen. Notwendig ist lediglich·die Bereitstellung der für den zur Anwendung kommenden Elektromotor vorzugebenden Vergleichswerte im Speicherbereich 7.

Der sich aus den Abweichungen von einem oder mehreren
Vergleichswerten ergebende Belastungszustand kann entweder automatisch zur Beeinflussung des Arbeitsprogrammes
verwendet werden oder durch Anzeige über das Ausgaberegister 4 und Treiberstufe 5 einer Bedienungsperson zur
Kenntnis gebracht werden.

Eine Anordnung zur Durchführung des erfindungsgemäßen
Verfahrens kann aus handelsüblichen Bauteilen zusammengesetz werden. Als Tachozähler 14 und als Frequenzteilerkette 21 können z. B. die Typen CD 4040 A, als Register
17 die Typen CD 4034 A und als Vergleicher (Komparator)
19 die Typen CD 4063 B der Firma RCA, beschrieben in der
Firmendruckschrift RCA COS/MOS Integrated Circuits, 1974,
und als Mikrocomputer 12 z. B. der Typ SAB 8080 der Firma
Siemens beschrieben im SIEMENS Datenbuch 1979/80, Mikrocomputer Bausteine, Band 1: Mikroprozessor, System SAB
8080, verwendet werden. Es ist aber auch möglich den Mikrocomputer 12 zusammen mit Eingaberegister 3, Ausgaberegister 4, Tachozähler 14, Stellregister 17, Vergleicher
19 und Frequenzteilerkette 21 monolithisch auf einem Chip
zu integrieren.

Das erfindungsgemäße Verfahren kann nicht nur zur Belastungsermittlung bei Waschautomaten sondern mit Vorteil
zur Belastungsermittlung von zahlreichen Küchengeräten
wie z. B. Rührwerken und Schneidewerken zur Anwendung
kommen. So können z. B. bei einer Teigrührmaschine über
die Belastungsermittlung die Viskosität und damit der Zustand eines Backteiges erfaßt werden und abhängig von der
Viskosität per Arbeitsprogramm bestimmte Zutaten dem Teig
zugegeben werden. Bei Gefriergeräten und Kühlschränken
können über die Belastungsermittlung des Elektromotors
der von Außentemperatur etc. abhängige Zustand des Kühlmittels erfaßt werden und - in der Regel werden bei Gefriergeräten Asynchronmotoren verwendet - gemäß dem im
Zusammenhang mit der Fig. 5 beschriebenen Verfahren der
Wirkleistungsanteil und damit der Wirkungsgrad des antreibenden Motors verbessert werden. Im Zusammenhang mit
dem Betrieb von Elektrofahrzeugen ist ferner mittels des
erfindungsgemäßen Verfahrens durch eine Belastungsmessung
eine Wirkungsgradoptimierung und somit eine bestmögliche
Batterieschonung möglich.

6 Figuren
12 Patentansprüche

Patentansprüche

1. Verfahren zur Belastungsermittlung von durch einen Elektromotor angetriebenen Geräten, insbesondere Haushaltsgeräten, die bei unterschiedlichen Belastungszuständen unterschiedliche Arbeitsprogramme abwickeln und bei denen die Betriebsspannung des Elektromotors mittels einer Regelelektronik geregelt wird, d a d u r c h g e k e n n z e i c h n e t , daß der das jeweilige Arbeitsprogramm bestimmende Belastungszustand durch Vergleich mindestens einer, von der die Betriebsspannung des Elektromotors regelnden Regelelektronik gelieferten Größe und mindestens eines für den Elektromotor vorgegebenen Vergleichswertes ermittelt wird.

2. Verfahren nach Anspruch 1, d a d u r c h g e - k e n n z e i c h n e t , daß als Vergleichswert mindestens ein einem Teil der Maximalbelastung des Elektromotors entsprechender Wert vorgegeben wird.

3. Verfahren nach Anspruch 1 oder 2, d a d u r c h g e k e n n z e i c h n e t , daß als Vergleichswert ein in etwa 3/4 der Maximalbelastung des Elektromotors entsprechender Wert vorgegeben wird.

4. Verfahren nach einem der Ansprüche 1 bis 3, d a - d u r c h g e k e n n z e i c h n e t , daß als von der Regelelektronik gelieferte Größe die sich nach der Anlaufphase des Elektromotors bei fest vorgegebenem Stellwert ergebende Motordrehzahl verwendet wird.

5. Verfahren nach einem der Ansprüche 1 bis 4, d a - d u r c h g e k e n n z e i c h n e t , daß als von der Regelelektronik gelieferte Größe der sich nach der Anlaufphase des Elektromotors bei einer vorgegebenen Soll-Drehzahl ergebende Stellwert verwendet wird.

6. Verfahren nach einem der Ansprüche 1 bis 4, d a -
d u r c h  g e k e n n z e i c h n e t ,  daß als von
der Regelelektronik gelieferte Größe die vorzugsweise
bei konstantem, vorgegebenem Sollwert zum Erreichen einer vorgegebenen Soll-Drehzahl benötigte Zeitdauer verwendet wird.

7. Verfahren nach einem der Ansprüche 1 bis 6, d a -
d u r c h  g e k e n n z e i c h n e t ,  daß als von
der Regelelektronik gelieferte Größe die zum Erreichen
eines vorgegebenen Stellwertes benötigte Zeitdauer verwendet wird.

8. Verfahren nach einem der Ansprüche 1 bis 7, d a -
d u r c h  g e k e n n z e i c h n e t ,  daß bei Verwendung eines Asynchronmotors als Elektromotor als von
der Regelelektronik gelieferte Größe die Phasendifferenz
zwischen Betriebsspannungs-Nulldurchgang und Betriebsstrom-Nulldurchgang verwendet wird.

9. Verfahren nach einem der Ansprüche 1 bis 8, d a -
d u r c h  g e k e n n z e i c h n e t ,  daß als Stellwert der von der Regelelektronik gelieferte Phasenanschnittswinkel für den Leistungsteil des Elektromotors
verwendet wird.

10. Verfahren nach einem der Ansprüche 1 bis 9, d a -
d u r c h  g e k e n n z e i c h n e t ,  daß als
Stellwert die von der Regelelektronik gelieferte Breite
des Impulsbreitensignals für den Leistungsteil des Elektromotors verwendet wird.

11. Anordnung zur Durchführung des Verfahrens nach einem
der Ansprüche 1 bis 10, d a d u r c h  g e k e n n -
z e i c h n e t ,  daß zur Belastungserkennung ein
gleichzeitig zur Betriebsspannungsregelung und zur Steuerung der Arbeitsprogramme dienender Mikrocomputer (12) vorgesehen ist, der in einem Speicher einen Speicherbereich (7) zur Speicherung der vorgegebenen Vergleichswerte aufweist.

12. Anordnung nach Anspruch 11, d a d u r c h g e - k e n n z e i c h n e t , daß der Mikrocomputer (12)in einem Speicher einen weiteren Speicherbereich (6), in dem die zur Betriebsspannungsregelung benötigten Soll-Werte des Elektromotors gespeichert sind, aufweist, daß der Mikrocomputer (12) über eine Datensammelleitung (13) mit einem Tachozähler (14), dessen Inhalt der Drehzahl des Elektromotors (16) (Ist-Wert) entspricht, verbunden ist, daß zur Speicherung des vom Mikrocomputer (12) ermittelten aktuellen Stellwertes ein über die Datensammelleitung (13) mit dem Mikrocomputer (12) verbundenes Stellregister (17) vorgesehen ist und daß eine Vergleichseinrichtung (8) vorgesehen ist, die durch Vergleich mindestens einer aus Stellregister (17) und/oder Tachozähler (14) gelieferten Größe mit mindestens einem vorgegebenen und gespeichertem Vergleichswert mindestens ein Entscheidungskriterium für das Arbeitsprogramm bereitstellt.

FIG 1

FIG 2

## FIG 3

## FIG 4

## FIG 5

FIG 6